# EUROPÄISCHE PATENTSCHRIFT

(11) **EP 3 183 809 B1**
(45) Veröffentlichungstag und Bekanntmachung des Hinweises auf die Patenterteilung: **28.03.2018**
(21) Anmeldenummer: 15813038.5
(22) Anmeldetag: 16.12.2015
(51) Int. Cl.: H02M 7/493, H02M 7/5395, H02M 1/44, H02J 3/38

(54) **NETZGEKOPPELTER WECHSELRICHTER, WECHSELRICHTERANORDNUNG UND BETRIEBSVERFAHREN FÜR EINE WECHSELRICHTERANORDNUNG**
MAINS-COUPLED INVERTER, INVERTER ARRANGEMENT, AND OPERATING METHOD FOR AN INVERTER ARRANGEMENT
ONDULEUR RACCORDÉ À UN RÉSEAU, SYSTÈME D'ONDULEUR ET PROCÉDÉ DE FONCTIONNEMENT POUR UN SYSTÈME D'ONDULEUR

(30) Priorität: 23.12.2014 DE 102014119502
(43) Veröffentlichungstag der Anmeldung: 28.06.2017
(73) Patentinhaber: SMA Solar Technology AG, 34266 Niestetal (DE)
(72) Erfinder: CORREA VASQUES, Pablo Ignacio, 91080 Spardorf (DE); BETHKE, Florian, 34117 Kassel (DE)
(86) Internationale Anmeldenummer: PCT/EP2015/079962
(87) Internationale Veröffentlichungsnummer: WO 2016/102266

(56) Entgegenhaltungen:
- DE-A1-102012 102 209
- US-A- 4 667 283
- US-A1- 2005 140 330

## Beschreibung

Die Erfindung betrifft einen netzgekoppelten Wechselrichter zur Einspeisung von Strom in ein Energieversorgungsnetz, wobei der Wechselrichter eine Ausgangsbrückenanordnung aufweist, die über einen Pulsweitenmodulator angesteuert wird, wobei zur Bestimmung von Schaltzeitpunkten der Ausgangsbrückenanordnung ein periodisches Hilfssignal eingesetzt wird, dessen Frequenz gemäß eines vorgegebenen periodischen Wobbelsignals variiert. Der Wechselrichter weist ferner eine Synchronisationseinheit zur Phasensynchronisation des Hilfssignals mit dem Energieversorgungsnetz auf, wobei die Synchronisationseinheit zur Einstellung eines vorgegebenen Phasenoffsets des periodischen Hilfssignals zu einer Phase des Energieversorgungsnetzes eingerichtet ist. Die Erfindung betrifft weiterhin eine Anordnung mit mindestens zwei derartigen Wechselrichtern und ein Verfahren zum Betreiben einer solchen Wechselrichteranordnung.

Netzgekoppelte Wechselrichter werden in Energieversorgungsanlagen, beispielsweise Photovoltaikanlagen und Windenergieanlagen, eingesetzt. Bei netzgekoppelten Wechselrichtern folgt ein am Ausgang des Wechselrichters ausgegebener Spannungs- bzw. Stromverlauf dem entsprechenden Verlauf im Energieversorgungsnetz. In den Energieversorgungsanlagen erzeugen Generatoren, beispielsweise Photovoltaikmodule in einer Serien- und/oder Parallelschaltung, eine Gleichspannung, die - gegebenenfalls nach einer Spannungsänderung durch einen Hochsetzsteller - einem Gleichspannungszwischenkreis zugeführt wird. Gleichstrom aus dem Gleichspannungszwischenkreis wird von dem Wechselrichter in einen bezüglich seiner Frequenz und Spannung zur Einspeisung in das Energieversorgungsnetz geeigneten Wechselstrom umgewandelt. Diese Umwandlung kann dabei in ein- oder mehrphasigen, insbesondere dreiphasigen Wechselstrom erfolgen. Dabei weist der Wechselrichter eine Ausgangsbrückenschaltung auf, die, je nach Anzahl der Phasen des Energieversorgungsnetzes in das eingespeist werden soll, eine oder mehrere Schaltbrücken aufweist, die üblicherweise mit Leistungshalbleiterschaltern bestückt sind.

Die Leistungshalbleiterschalter werden dabei gemäß bestimmter Modulationsmuster so angesteuert, dass in Verbindung mit Filtern, die zwischen dem Wechselrichter und dem Energieversorgungsnetz angeordnet sind, ein möglichst sinusförmiger Ausgangsstrom erzeugt wird. Bei den häufig eingesetzten Pulsweiten-Modulationsverfahren (PWM - Pulse Width Modulation) werden die Leistungshalbleiterschalter mit einer Schaltfrequenz ein- und ausgeschaltet, die deutlich höher ist als die Frequenz der Wechselspannung im Energieversorgungsnetz (beispielsweise eine Schaltfrequenz von 3 bis 30 kHz gegenüber einer Netzfrequenz von 50 oder 60 Hz). Im Verlauf einer Periode der Netzfrequenz wird dabei das Tastverhältnis genannte Verhältnis zwischen der Einschaltzeit und der Ausschaltzeit innerhalb einer Schaltfrequenzperiode derart verändert, dass sich ein möglichst sinusförmiger Verlauf des Ausgangsstroms ergibt. Bekannte Ausgestaltungen zur Bestimmung der Tastverhältnisse bzw. der Schaltzeitpunkte sind beispielsweise das "Sinus-Dreieck-Modulationsverfahren", das "Raumzeiger-Modulationsverfahren (SVM - Space Vector Modulation)" oder modifizierte Sinus-Dreieck-Modulationsverfahren, z.B. das sogenannte "Sinus-Dreieck-Modulationsverfahren mit dritter Harmonischer". Bei diesen PWM-Verfahren wird ein periodisches Hilfssignal oder Trägersignal, z.B. ein Dreiecksignal beim "Sinus-Dreieck-Modulationsverfahren", oder ein Taktsignal bei dem "SVM-Verfahren", zur Bestimmung der Schaltzeitpunkte eingesetzt.

Auch bei aufwendigeren Modulationsverfahren ist jedoch typischerweise die am Ausgang der Wechselrichterbrücken erzeugte Spannung kein reines Sinussignal, sondern zeigt z.B. Frequenzkomponenten bei der Schaltfrequenz der Leistungshalbleiterschalter gemäß dem Modulationsverfahren.

Zur Erzielung hoher Leistungen werden insbesondere bei größeren Photovoltaikanlagen, beispielsweise Freilandanlagen, häufig zwei oder mehr Wechselrichter parallel eingesetzt. Beim Parallelbetrieb von mehreren Wechselrichtern kann es zu unerwünschten Kreis- oder Ausgleichsströmen auf Grund asynchroner Schaltzeitpunkte innerhalb der Ausgangsbrückenanordnungen der einzelnen Wechselrichter kommen. Das tritt insbesondere dann ein, wenn die periodischen Hilfssignale, die zur Bestimmung der Schaltzeitpunkte der Ausgangsbrückenanordnungen der einzelnen Wechselrichter eingesetzt werden, stark gegeneinander phasenverschoben sind. Dies hat asynchrone Schaltvorgänge zur Folge, die zu kurzzeitigen Spannungsdifferenzen zwischen den Wechselrichtern führen können, die wiederum hochfrequente Ausgleichsströme hervorrufen. Diese Ausgleichsströme können insbesondere dann auftreten, wenn die Wechselrichter ausgangsspannungsseitig nicht vollständig voneinander getrennt sind. Sie stellen eine unerwünschte zusätzliche Strombelastung für die betroffenen elektronischen Komponenten wie etwa die AC-Filterkondensatoren dar, was die Lebensdauer dieser Bauelemente negativ beeinflussen kann.

Die Druckschrift US 2008/0265680 A1 beschreibt eine Anordnung mehrerer Wechselrichter, die mit ihren Ausgängen unmittelbar gekoppelt sind. Die Wechselrichter werden durch PWM-Verfahren gesteuert, wobei die dabei verwendeten Hilfssignale anhand einer Netzspannung synchronisiert werden. Durch diese Synchronisation wird erreicht, dass die Leistungshalbleiterschalter der gekoppelten Wechselrichter an gleichen Zeitpunkten geschaltet werden.

Aus der Druckschrift WO 2012/123559 A2 ist ein Verfahren bekannt, das für induktiv, beispielsweise über Transformatoren gekoppelte Wechselrichter geeignet ist. Bei diesem Verfahren ist vorgesehen, die zur Erzeugung der Ansteuersignale der Halbleiterleistungsschalter im PWM-Verfahren verwendete Hilfssignale anhand der Netzspannung zu synchronisieren, wobei ein Phasenunterschied zwischen den Hilfssignalen verschiedener Wechselrichter vorgesehen ist.

Auch die Druckschrift US 2010/0156192 A1 und der Artikel "Voltage Control in a Battery-Operated Sinusoidal Puls-Width-Modulated (SPWM) Photovoltaic Inverter", Africon, 1999 IEEE, Volume 2, Seiten 719-724, beschreiben PWM-Verfahren, bei denen ein zur Ansteuerung von Halbleiterleistungsschaltern verwendetes Hilfssignal anhand der Netzspannung synchronisiert wird. Die Synchronisation wird mithilfe einer PLL (Phase Locked Loop)-Schaltung erzielt.

Ausgangsseitig ist bei Wechselrichtern üblicherweise ein Wechselspannungsfilter vorgesehen, der das ausgangsseitige Wechselstromsignal formt und insbesondere dafür sorgt, dass der Ausgangsstromverlauf möglichst sinusförmig ist. Aus diesem Grund wird der Filter häufig auch als Sinusfilter bezeichnet. Eine effektive Signalformung ist beispielsweise mit einem sogenannten LCL-Filter möglich, bei dem zwei Induktivitäten in einer Phasenleitung in Serie geschaltet sind und bei dem zwischen dem Mittelabgriff zwischen den Induktivitäten und einer der weiteren Phasen, einem Nullleiter oder Mittelpunktabgriff der AC-Brücke des Ausgangswechselsignals des Wechselrichters ein Kondensator angeordnet ist. Ein derartiger Filter ist besonders effektiv zur Dämpfung der schaltfrequenten Anteile der Brückenspannungen geeignet. Allerdings ist es material- und damit kostenaufwendig. Es hat sich gezeigt, dass insbesondere die energieversorgungsnetzseitige Induktivität eines derartigen Ausgangsstromfilters bezüglich ihres Induktivitätswertes verkleinert werden gegebenenfalls sogar ganz wegfallen kann, wenn bei dem Wechselrichter nicht eine fest vorgegebene Frequenz des Hilfssignals zur Bestimmung der Schaltzeitpunkte der Halbleiterleistungsschalter der Ausgangsbrückenanordnung, sondern ein periodisches Hilfssignal mit variierender Frequenz verwendet wird. Grund dafür ist, dass sich bei Verwendung eines Hilfssignals mit variierender Frequenz, wie oben geschildert, die aufgrund der pulsmodulierten Brückenspannung entstehenden elektromagnetischen Störungen über einen breiteren Frequenzbereich erstrecken und damit die jeweiligen Amplituden der elektromagnetischen Felder bei einem konkreten Frequenzwert deutlich kleiner ausfallen. Von den Energieversorgungsunternehmen für die spektrale Intensität eines Störsignals gemachte Vorgaben können dann auch mit kleineren Induktivitäten im Ausgangsstromfilter erfüllt werden, wobei insbesondere die ausgangsseitige, aber unter Umständen auch die eingangsseitige Induktivität verkleinert werden können. Gegebenenfalls kann die energieversorgungsnetzseitige Induktivität sogar ganz entfallen.

Zur Erzeugung eines Hilfssignals mit einer variablen Frequenz wird üblicherweise ein sogenanntes Wobbelsignal eingesetzt, dessen Verlauf die Frequenz des Hilfssignals moduliert. Als Spannungsverlauf kommt dabei bevorzugt ein dreieckförmiger Verlauf zum Einsatz.

Ein Wechselrichter mit einem PWM-Verfahren mit variabler Pulsfrequenz ist beispielsweise aus der Druckschrift DE 197 48 479 C1 bekannt. Bei diesem Verfahren ist die Pulsfrequenz abhängig von dem Verlauf des erzeugten Wechselstroms, wobei die Pulsfrequenz im Nulldurchgang des Wechselstroms um ein Vielfaches größer ist als im Bereich der maximalen Amplitude des Wechselstroms. Durch dieses Verfahren werden Schaltverluste von Leistungshalbleiterschaltern des Wechselrichters minimiert und gleichzeitig Oberschwingungen beim Stromverlauf des erzeugten Wechselstroms minimiert.

Ein weiterer Einsatzzweck eines Hilfssignals mit nicht konstanter sondern variabler Frequenz liegt darin, eine bestimmte vorgegebene und gewünschte Frequenz eines Hilfssignals auch dann einstellen zu können, wenn die Frequenzauflösung des Signalgenerators, der das Hilfssignal erzeugt, zur Einstellung der gewünschten Frequenz nicht ausreicht. In diesem Fall kann mit einem bestimmten vorgegebenen Tastverhältnis zwischen zwei einstellbaren Frequenzen eines periodischen Hilfssignals derart hin und hergesprungen werden, dass sich zumindest im Mittel die gewünschte Frequenz ergibt. Das zuvor genannte Wobbelsignal für die Hilfsfrequenz ist in diesem Fall ein Rechtecksignal.

Beim Zusammenschalten von zwei oder mehr Wechselrichtern, die ein gewobbeltes, d.h. in seiner Frequenz variierendes Hilfsspannungssignal verwenden, kann das zuvor geschilderte Verfahren zur Synchronisation der periodischen Hilfssignale mit der Netzfrequenz nicht angewendet werden. Damit ist es mit den bekannten Verfahren nicht möglich, die Ausgleichsströme zu unterdrücken.

Es ist daher eine Aufgabe der vorliegenden Erfindung, einen Wechselrichter bzw. eine Anordnung mehrerer derartiger Wechselrichter sowie ein Betriebsverfahren für eine Anordnung mehrerer Wechselrichter zu schaffen, bei der auch bei gewobbelten Hilfsspannungssignalen mit variierender Frequenz Ausgleichsströme zwischen zusammengeschalteten Wechselrichtern wirksam verhindert werden.

Diese Aufgabe wird gelöst durch einen Wechselrichter, eine Wechselrichteranordnung bzw. ein Betriebsverfahren für eine Wechselrichteranordnung mit den jeweiligen Merkmalen der unabhängigen Ansprüche. Vorteilhafte Ausgestaltungen und Weiterbildungen sind in den abhängigen Ansprüchen angegeben.

Ein erfindungsgemäßer netzgekoppelter Wechselrichter der eingangs genannten Art zeichnet sich dadurch aus, dass eine weitere Synchronisationseinheit vorhanden ist, die zur Phasensynchronisation des periodischen Wobbelsignals mit dem Energieversorgungsnetz eingerichtet ist.

Es wird also nicht nur das periodische Hilfssignal selbst, sondern auch das die Frequenz des periodischen Hilfssignals beeinflussende Wobbelsignal mit dem Energieversorgungsnetz synchronisiert. Damit wird sichergestellt, dass sich die periodischen Hilfssignale aller Wechselrichter bezüglich ihrer Frequenz in gleicher Weise verändern. Für alle miteinander gekoppelten Wechselrichter einer Wechselrichteranordnung ist damit über das Energieversorgungsnetz sichergestellt, dass das periodische Hilfssignal gleiche Frequenz und gleiche Phasenlage aufweist. Damit werden die Halbleiterleistungsschalter der Ausgangswechselrichterbrücken aller Wechselrichter gleichermaßen angesteuert und somit Ausgleichsströme zwischen den Wechselrichtern verhindert.

Dabei umfassen die Synchronisationseinheit und die weitere Synchronisationseinheit jeweils eine PLL (Phase Lock Loop)- Schaltung. Auf diese Weise kann auf einfache Weise eine Synchronisation sowohl des Hilfssignals, als auch des Wobbelsignals mit dem Energieversorgungsnetz erfolgen, obwohl Hilfssignal und Wobbelsignal üblicherweise eine um ein Vielfaches höhere Frequenz aufweist als das Energieversorgungsnetz. Bevorzugt umfasst die PLL-Schaltung jeweils einen Frequenzwandler mit einer Umwandlungstabelle und einem D/A (Digital/Analog)-Wandler umfasst, zur Umwandlung des periodischen Hilfssignals bzw. des periodischen Wobbelsignals in eine phasenstarre Sinusspannung geringerer Frequenz.

Zudem ist das periodische Wobbelsignal über einen Korrektursignalerzeuger und einen Addierer zur Schwingungsunterdrückung auf eine Regelstrecke der PLL-Schaltung der Synchronisationseinheit geführt. Auf diese Weise können Schwingungsneigungen bei der Regelung der Frequenz des Hilfssignals unterdrückt werden.

In einer vorteilhaften Ausgestaltung des Wechselrichters ist der Pulsweitenmodulator ein Sinus-Dreieck-Modulator und das periodische Hilfssignal ein Dreiecksignal.

In einer weiteren vorteilhaften Ausgestaltung des Wechselrichters ist das periodische Wobbelsignal ein Dreiecksignal. Die von einem Wechselrichter aufgrund der Taktung der Halbleiterleistungsschalter abgegebenen elektromagnetischen Störungen sind in ihrer Frequenz mit der Frequenz des periodischen Hilfssignals korreliert. Bei Verwendung eines dreieckförmigen Wobbelsignals zur Variation der Frequenz des Hilfssignals verteilen sich eingebrachte elektromagnetische Störungen auf einen breiteren Frequenzbereich. Die jeweiligen Amplituden der elektromagnetischen Störungen fallen dann bei einem konkreten Frequenzwert deutlich kleiner aus.

In einer weiteren vorteilhaften Ausgestaltung des Wechselrichters ist das periodische Wobbelsignal ein Rechtecksignal, durch das das periodische Hilfssignal auf zwei verschiedene Frequenzen eingestellt wird. Bevorzugt unterscheiden sich die beiden Frequenzen um eine Frequenz, die der minimal einstellbaren Frequenzdifferenz eines Hilfssignalgenerators für das Hilfssignal entspricht. Besonders bevorzugt weist das rechteckförmige periodische Wobbelsignal ein Tastverhältnis auf, bei dem sich im Mittel eine vorgegebene Frequenz, die zwischen den beiden Frequenzen liegt, für das Hilfssignal einstellt. Auf diese Weise kann bei einem Wechselrichter eine Frequenz des Hilfssignal eingestellt werden, auch wenn die Frequenzauflösung des Generators für das periodische Hilfssignal die Einstellung dieser gewünschten Frequenz aufgrund einer nicht ausreichenden Frequenzauflösung nicht zulässt. Mit Hilfe des rechteckförmigen Wobbelsignals kann zwischen benachbarten diskreten und einstellbaren Frequenzen derart hin- und hergesprungen werden, dass im Mittel das Hilfssignal mit der gewünschten Frequenz generiert wird.

Eine erfindungsgemäße Wechselrichteranordnung mit mindestens zwei netzgekoppelten Wechselrichtern, die wechselstromseitig miteinander gekoppelt sind, zeichnet sich dadurch aus, dass die Wechselrichter wie zuvor beschrieben ausgebildet sind. Es ergeben sich die im Zusammenhang mit dem Wechselrichter genannten Vorteile.

Besonders vorteilhaft ist jedem Wechselrichter einer derartigen Wechselrichteranordnung wechselstromseitig ein Ausgangsstromfilter nachgeschaltet, wobei die Ausgangsstromfilter mit einem jeweiligen Ausgang miteinander verbunden sind. Bevorzugt ist der Ausgangsstromfilter ein LCL-Filter mit einer ersten Induktivität und einer zweiten Induktivität, wobei die zweite Induktivität einen kleineren Induktivitätswert aufweist als die erste Induktivität. Alternativ kann der Ausgangsstromfilter als LC-Filter mit nur einer Induktivität ausgeführt sein.

In einer weiteren vorteilhaften Ausgestaltung der Wechselrichteranordnung sind die miteinander verbundenen Ausgänge der Ausgangsstromfilter über einen Transformator mit einem Energieversorgungsnetz verbunden.

Falls bei einem Photovoltaik-Kraftwerk mehrere PV-Anlagen mit derartigen Wechselrichteranordnungen vorgesehen sind, kann vorgesehen sein, die Wechselrichter jeweils einer Wechselrichteranordnung wie zuvor beschrieben im Hinblick auf die Hilfs- und Wobbelsignale zu synchronisiert. Die einzelnen PV-Anlagen werden jedoch mit vorgegebenen, von Null verschiedenen unterschiedlicheren Phasenoffsets ihrer Hilfssignale betrieben. Beispielsweise kann beim Zusammenschalten einer geraden Anzahl von PV-Anlagen auf einen Netzanschlusspunkt eines Energieversorgungsnetzes vorgesehen sein, die PV-Anlagen jeweils paarweise so zu synchronisieren, dass ihre jeweiligen Abweichungen des Spannungsverlaufes von einem sinusförmigen Verlauf möglichst gegenphasig (Phasenverschiebung von 180°) verlaufen und sie sich so aufheben. Bei einer ungeraden Anzahl von PV-Anlagen werden diese bevorzugt mit vorgegebenen, von Null verschiedenen Phasenoffsets betrieben, die bevorzugt unterschiedlich sind und möglichst gleichmäßig über den gesamten Phasenraum (0 bis 2π bzw. 0-360°) verteilt sind.

Ein weiterer Aspekt der Erfindung betrifft ein Betriebsverfahren für eine Wechselrichteranordnung zur Einspeisung von Leistung in ein Energieversorgungsnetz mit mindestens zwei Wechselrichtern, die wechselstromseitig miteinander gekoppelt sind. Sie weisen jeweils eine Ausgangsbrückenanordnung auf, die pulsweitenmoduliert unter Verwendung eines periodischen Hilfssignals, das mit jeweils einem periodischen Wobbelsignal frequenzmoduliert ist, angesteuert wird. Das jeweilige periodischen Hilfssignal wird mit dem Energieversorgungsnetz phasensynchronisiert. Das Betriebsverfahren zeichnet sich dadurch aus, dass die periodischen Wobbelsignale der beiden gekoppelten Wechselrichter mit dem Energieversorgungsnetz und damit untereinander phasensynchronisiert werden. Das periodische Wobbelsignal ist über einen Korrektursignalerzeuger und einen Addierer zur Schwingungsunterdrückung auf eine Regelstrecke einer PLL-Schaltung zur Synchronisation des periodischen Hilfssignals geführt. Wiederum ergeben sich die im Zusammenhang mit dem Wechselrichter genannten Vorteile.

Die Erfindung wird nachfolgend anhand von Ausführungsbeispielen mithilfe von Figuren näher erläutert. Die Figuren zeigen:
- Fig. 1: ein schematisches Blockschaltbild einer Energieversorgungseinrichtung mit einer Wechselrichteranordnung mit zwei oder mehr Wechselrichtern;
- Fig. 2: ein Teil eines Wechselrichters in einer schematischen Übersichtsdarstellung in einem schematischen Blockschaltbild;
- Fig. 3: bei dem in Fig. 2 dargestellten Wechselrichter einsetzbare Synchronisationseinrichtungen für das Hilfs- bzw. das Wobbelsignal in einem detaillierteren schematischen Blockschaltbild und
- Fig. 4: Zeitverläufe eines periodischen Hilfssignals und eines Wobbelsignals in zwei Diagramen.

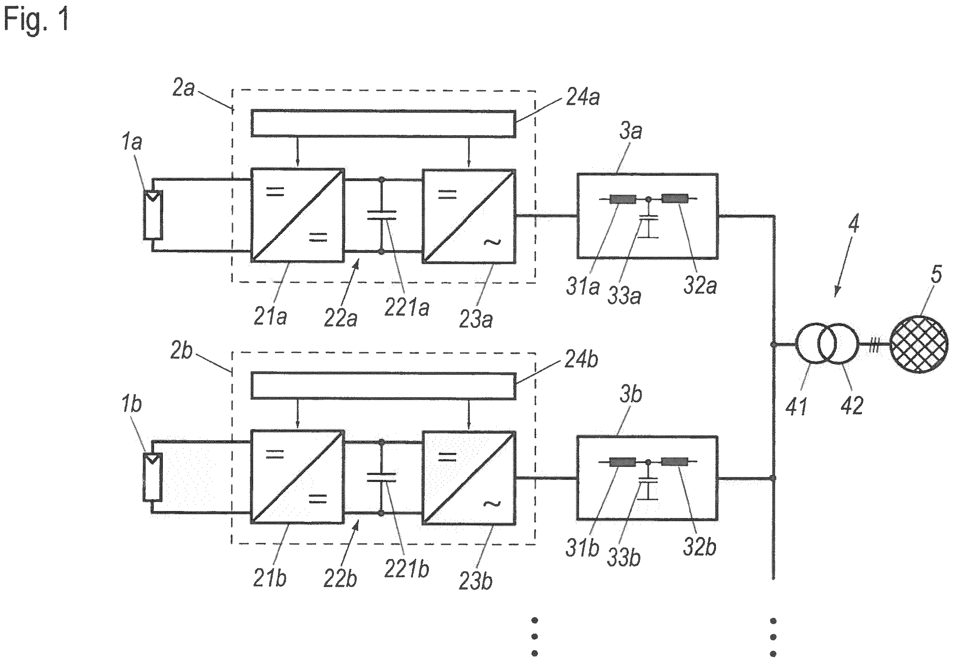

Fig. 1 zeigt eine Photovoltaikanlage als Energieversorgungsanlage in einem schematischen Blockschaltbild. Die Photovoltaikanlage, abkürzend im Folgenden als PV-Anlage bezeichnet, weist zwei Photovoltaikgeneratoren (PV-Generatoren) 1a, 1b auf, die jeweils mit einem Wechselrichter 2a, 2b verbunden sind. Jedem der Wechselrichter 2a, 2b ist ein Ausgangsstromfilter 3a, 3b nachgeschaltet, der der Signalformung des Ausgangssignals des jeweiligen Wechselrichters 2a, 2b dient. Der Ausgangsstromfilter 3a, 3b bildet aus einem gepulsten Stromsignal einen möglichst sinusförmigen Ausgangsstromverlauf. Im dargestellten Ausführungsbeispiel weist jeder der Ausgangsstromfilter 3a, 3b eine Reihenschaltung von einer ersten Induktivität 31a bzw. 31b und einer zweiten Induktivität 32a bzw. 32b auf, wobei ein Mittelabgriff zwischen den Induktivitäten 31a, 32a bzw. 31b, 32b über einen Kondensator 33a, 33b mit einem Nullpunktpotenzial verbunden ist. Ein derartiger Ausgangsstromfilter 3a, 3b wird aufgrund der verwendeten Komponenten auch als LCL-Filter bezeichnet.

Ausgangsseitig sind die Ausgangsstromfilter 3a, 3b zusammengeschaltet, sodass über die Ausgangsstromfilter 3a, 3b auch die Wechselrichter 2a, 2b gekoppelt sind.

Die ausgangsseitig miteinander gekoppelten Wechselrichter 2a, 2b sind über einen Transformator 4 mit einem Energieversorgungsnetz 5 verbunden. Der Transformator 4 weist zu diesem Zweck eine Primärwicklung 41 und eine Sekundärwicklung 42 auf. Wie in der Figur angedeutet ist, können auf gleiche Art auch mehr als die beiden dargestellten Wechselrichter 2a, 2b ausgangsseitig gekoppelt sein.

Symbolhaft sind in der Figur die PV-Generatoren 1a, 1b jeweils nur durch das Schaltsymbol einer einzelnen Photovoltaikzelle dargestellt. Es ist bekannt, dass die PV-Generatoren 1a, 1b in einer Realisierung der dargestellten PV-Anlage jeweils aus einer Mehrzahl von Photovoltaikmodulen (PV-Modulen) aufgebaut sein können, die serien- und/oder parallel verschaltet sind. Aus Gründen der Übersichtlichkeit sind zudem weitere Elemente von PV-Anlagen, beispielsweise gleichstromseitige (DC - Direct Current) oder wechselstromseitige (AC - Alternating Current) Schaltorgane, beispielsweise Anlagentrenner oder Sicherungsorgane, in der Figur nicht wiedergegeben.

Die Wechselrichter 2a, 2b umfassen im dargestellten Ausführungsbeispiel jeweils einen eingangsseitigen Gleichstrom-/Gleichstrom-Wandler 21a, 21b (DC/DC-Wandler), der jeweils über einen Zwischenkreis 22a, 22b mit einem Gleichstrom-/Wechselstrom-Wandler 23a, 23b (DC/AC-Wandler) verbunden ist. Es wird angemerkt, dass ein anmeldungsgemäßer Wechselrichter auch ohne einen eingangsseitigen DC/DC-Wandler aufgebaut sein kann. Im Zwischenkreis ist jeweils ein Kondensator 221a, 221b angeordnet, der der Glättung einer Zwischenkreisspannung Uz dient und eine gepulste Stromentnahme ohne Spannungseinbrüche der Zwischenkreisspannung Uz durch die DC/AC-Wandler 23a, 23b ermöglicht. Die Wechselrichter 2a, 2b weisen je eine Steuereinrichtung 24a, 24b unter anderem zur Steuerung der DC/DC-Wandler 21a, 21b und der DC/AC-Wandler 23a, 23b auf. Die Steuerung der DC/DC-Wandler 21a, 21b kann dabei z.B. auch ein sogenanntes MPP (Maximum Power Point) - Nachführverfahren umfassen, das dem Betreiben der PV-Generatoren 1a, 1b an einem Arbeitspunkt maximaler Leistung dient.

Die PV-Anlage ist zur Einspeisung in das Energieversorgungsnetz 5 auf drei Phasen ausgelegt. Entsprechend weisen die Wechselrichter 2a, 2b in diesem Ausführungsbeispiel einen dreiphasigen Ausgang auf und die Ausgangsstromfilter 3a und 3b sowie der Transformator 4 sind dreiphasig ausgestaltet. In den Figuren wurde zur besseren Übersicht auf die konkrete Darstellung der einzelnen Phasen verzichtet. Die zuvor genannte Anzahl von drei Phasen ist lediglich beispielhaft zu verstehen; ein anmeldungsgemäßer Wechselrichter und eine damit aufgebaute Wechselrichteranordnung können ebenso für einen Betrieb mit einer beliebigen Anzahl an Phasen, insbesondere einen einphasigen Betrieb geeignet sein.

Die Wechselrichter 2a, 2b weisen in ihren DC/AC-Wandlern 23a, 23b Ausgangsbrückenschaltungen mit Halbleiterleistungsschaltern auf, die in einem PWM-Verfahren angesteuert werden. Das Ausgangssignal der DC/AC-Wandler 23a, 23b ist daher ein getaktetes Gleichstromsignal, wobei die Taktfrequenz, also die Zahl der Schaltzyklen pro Sekunde, im Bereich von einem Kilohertz bis zu über 100 Kilohertz liegen kann.

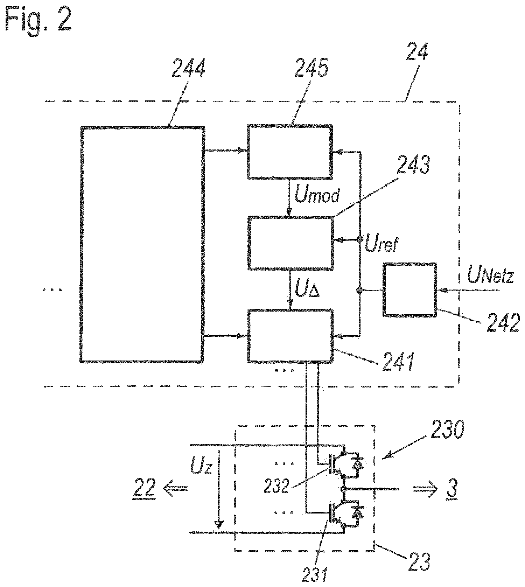

Fig. 2 zeigt einen detaillierten Ausschnitt eines der Wechselrichter 2a, 2b aus der Fig. 1 ebenfalls in einem Blockschaltbild. Die folgenden Ausführungen beziehen sich auf beide Wechselrichter 2a, 2b, die im dargestellten Ausführungsbeispiel der Fig. 1 gleich aufgebaut sind. Es wird daher auf eine Unterscheidung mit dem Index a, b bei den Bezugszeichen verzichtet.

Der DC/AC-Wandler 23 des Wechselrichters 2 weist eine Ausgangsbrückenanordnung 230 auf, von der ein Brückenzweig symbolisch dargestellt ist. Bei dreiphasiger Ausführung des Wechselrichters 2 sind üblicherweise drei solcher Brückenzweige vorhanden, die in der Figur durch Auslassungspunkte angedeutet sind. Es sind aber durchaus auch andere Schaltungstopologien denkbar.

In der dargestellten Ausführungsform weist jeder Brückenzweig zwei Halbleiterleistungsschalter 231, 232 auf. Beispielhaft sind IGBT (Insulated Gate Bipolar Transistors) Schalter dargestellt, die jeweils mit einer antiparallel geschalteten Schutzdiode versehen sind. Es können jedoch auch andere geeignete Halbleiterschalter, beispielsweise MOSFETs (Metalloxid Semiconductor Field-Effect Transistors) oder SiC (Siliziumcarbid)-Transistoren, eingesetzt werden. Die Schalter 231, 232 werden von der Steuereinrichtung 24 angesteuert. Diese umfasst einen Pulsweitenmodulator 241, einen Referenzspannungsgenerator 242, eine Synchronisationseinheit 243, eine Steuereinheit 244 und eine weitere Synchronisationseinheit 245.

Der Pulsweitenmodulator 241 generiert die Ansteuersignale für die Schaltelemente 231, 232 derart, dass ein ihm vorgegebener Verlauf einer Referenzspannung U_{ref} nachgebildet wird. Die Referenzspannung U_{ref} wird von dem Referenzspannungsgenerator 242 aus einem diesem zugeführten Netzspannungsverlauf des Energieversorgungsnetzes 5 gebildet. Damit folgt der am Ausgang des Wechselrichters 2 ausgegebene Spannungsverlauf dem der Netzspannung; der Wechselrichter ist netzgekoppelt. Der Referenzspannungsgenerator 242 kann zur Bereitstellung der Referenzspannung Uref die Spannung einer der Phasen des Energieversorgungsnetzes, im Folgenden Netzspannung U_{Netz} genannt, unmittelbar auf ein kleineres Spannungsniveau der Referenzspannung U_{ref} abbilden oder sich auch der Zwischenschaltung eines Referenzspannungssinusgenerators bedienen, der über eine Phasensynchronisationsschaltung (PLL - Phase Lock Loop) mit der vorgegebenen Netzspannung U_{Netz} synchronisiert wird.

Die Frequenz des periodischen Hilfssignals, also hier des benutzen Dreiecksignals U_{Δ} , wird der Synchronisationseinheit 243 dabei von der weiteren Synchronisationseinheit 245 in Form eines Signals U_{mod} übermittelt. Das Signal U_{mod} ist dabei anmeldungsgemäß nicht konstant, sondern variiert im Laufe der Zeit. Es wird nachfolgend auch als Wobbelsignal U_{mod} bezeichnet. Das Wobbelsignal U_{mod} kann beispielsweise ein dreieckförmiges oder sägezahnförmiges Signal sein, falls die Frequenz des periodischen Hilfssignals linear und ggf. kontinuierlich innerhalb gewisser Grenzen variiert wird. Das Wobbelsignal U_{mod} kann auch ein Rechtecksignal sein, falls ein Wechsel zwischen zwei diskreten Frequenzen des periodischen Hilfssignals vorgesehen ist.

Zum Betreiben einer Wechselrichteranordnung wird eine Phasenlage zwischen dem periodischen Hilfssignal, hier dem Dreiecksignal U_{Δ}, und der Netzspannung U_{Netz}, repräsentiert durch die Referenzspannung U_{ref}, für jeden Wechselrichter der Wechselrichteranordnung derart eingestellt, dass die Hilfssignale zweier gekoppelter Wechselrichter phasengleich zueinander sind. Zu diesem Zweck wird der Synchronisationseinheit 243 die Referenzspannung U_{ref} zugeführt.

Anmeldungsgemäß ist weiter vorgesehen, auch das Wobbelsignal U_{mod} mit der Netzspannung U_{Netz} zu synchronisieren. Zu diesem Zweck wird auch der weiteren Synchronisationseinheit 245 die Referenzspannung U_{ref} zugeführt.

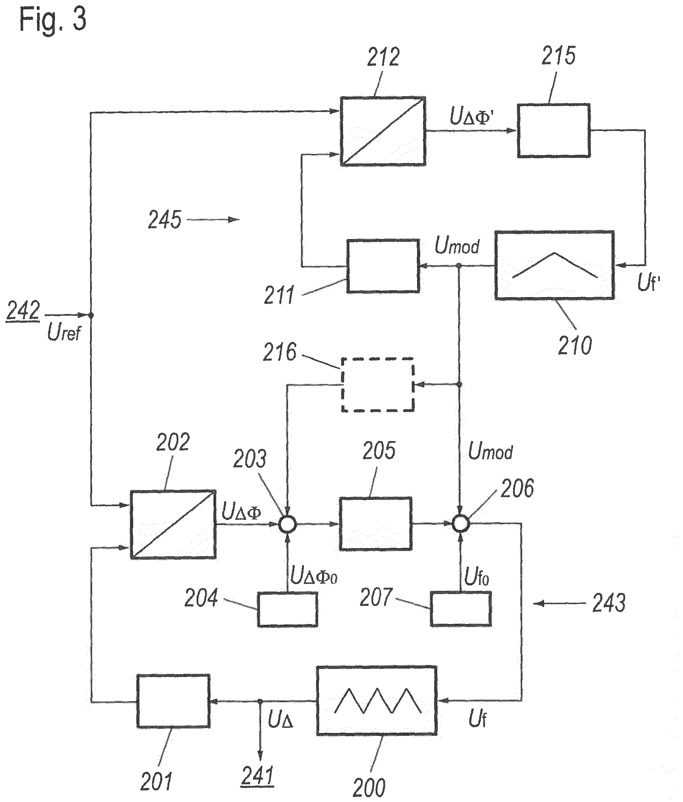

Fig. 3 zeigt den Aufbau der Synchronisationseinheit 243 und der weiteren Synchronisationseinheit 245 aus Fig. 2 detaillierter in einem Blockschaltbild. Es wird vorab darauf hingewiesen, dass in Fig. 3 Synchronisationseinheiten mit analogen Regelkreisen für die Phasenlage des Hilfssignals für die PWM bzw. des Wobbelsignals dargestellt sind. Es versteht sich, dass die Synchronisationseinheiten ebenfalls über eine digital arbeitende Regelung verfügen können.

Die Synchronisationseinheit 243 weist einen Dreieckspannungsgenerator 200 auf, der als spannungsgesteuerter Frequenzgenerator ausgeführt ist, dessen Frequenz f über ein Eingangsspannungssignal U_{f} gesteuert wird. Das vom Dreieckspannungsgenerator 200 an einem Ausgang abgegebene Spannungssignal wird als Dreiecksignal U_{Δ} dem Pulsweitenmodulator 241 bereitgestellt.

Innerhalb der Synchronisationseinheit 243 wird das Dreiecksignal U_{Δ} einem Frequenzwandler 201 zugeführt. Die Frequenz f des Dreiecksignals U_{Δ} beträgt üblicherweise ein ganzzahliges Vielfaches der Netzfrequenz f₀ des Energieversorgungsnetzes 5. Das Frequenzverhältnis f/f₀ zwischen den beiden Frequenzen liegt bei derzeit verwendeten Verfahren im Bereich von etwa 10 bis 1000. Zur Durchführung eines Vergleichs der Phasenlagen des Dreiecksignals U_{Δ} und des niederfrequenteren Netzspannungsverlaufs führt der Frequenzwandler 201 eine Frequenzteilung des Dreiecksignals U_{Δ} um den genannten Faktor, sowie eine Wellenformumwandlung in ein sinusförmiges Signal durch. Eine Möglichkeit der Umwandlung besteht darin, einen umlaufenden Zähler einzurichten, dessen Zählerinhalt pro durchlaufener Periode des Dreiecksignals U_{Δ} um den Wert 1 inkrementiert wird. Wenn der Zähler einen Zählerstand erreicht, der dem Frequenzverhältnis f/f₀ entspricht, wird der Zähler zurück auf einen Anfangswert von 1 gesetzt. Der Zähler durchläuft so zyklisch f/f₀ verschiedene Werte, wobei jeder zyklische Durchlauf einer Periodendauer des Sinussignals der Netzspannung U_{Netz} entspricht. In dem Frequenzwandler 201 ist eine Umwandlungstabelle abgelegt, in der für jeden Zählerstand ein korrespondierender Wert einer Sinusspannung mit der Periodendauer der Netzfrequenz f₀ abgelegt ist. Am Ausgang des Frequenzwandlers 201 wird ein mittels einem Digital-/Analogwandlers erzeugtes Spannungssignal gemäß den Werten dieser Tabelle ausgegeben. Der Frequenzwandler 201 stellt somit an seinem Ausgang ein sinusförmiges Spannungssignal bereit, das phasenstarr an das Dreiecksignal U_{Δ} des Dreieckgenerators 200 gekoppelt ist und in seiner Frequenz der Netzspannung U_{Netz} entspricht. Dieses Signal wird ebenso einem Phasenvergleicher 202 zugeführt wie das von dem Referenzspannungsgenerator 242 (vgl. auch Fig. 2) bereitgestellte, zur Netzspannung phasenstarre Referenzsignal U_{ref}. Am Ausgang des Phasenvergleichers 202 wird ein Signal U_{ΔΦ} ausgegeben, das proportional zum Phasenunterschied der beiden Eingangssignale ist.

In einem Addierer 203 wird diesem Signal noch eine von einem optionalen Offseteinsteller 204 erzeugte Spannung aufsummiert, die einem einzustellenden Phasenoffset ΔΦ₀ entspricht, der bei galvanisch gekoppelten Wechselrichtern bevorzugt Null ist. Es kann jedoch auch ein Phasenoffset ΔΦ₀ ungleich null vorgesehen sein, beispielsweise um Differenzen in den Werten verschiedener Ausgangsstromfilter 3a, 3b und durch diese hervorgerufene Phasenverschiebungen der Ausgangsströme unterschiedlicher Wechselrichter 2a, 2b zu berücksichtigen. Das Summensignal wird als Steuergröße einem Regelbaustein 205 zugeführt, der beispielsweise als Proportional-/Integralregler (PI-Regler) ausgeführt sein kann.

Der Ausgang des Regelbausteins 205 wird in einem weiteren Addierer 206 zu einer Grundfrequenzspannung U_{f0}, die ein Grundfrequenzeinsteller 207 ausgibt, und zu dem Wobbelsignal U_{mod} addiert, um die Steuerspannung U_{f} zu erzeugen, die, wie zuvor beschrieben, den Dreieckgenerator 200 und damit die Frequenz f des dreieckförmigen Hilfssignals U_{Δ} steuert.

Die Synchronisationseinheit 243 umfasst so einen Phasenregelkreis (PLL) durch den die Frequenz f des Dreieckgenerators 200 über den Regelbaustein 205 ständig so nachgeregelt wird, dass eine feste Phasenbeziehung zwischen dem Dreiecksignal U_{Δ} und der Referenzspannung U_{ref} herrscht. Diese Phasenbeziehung kann dabei über den Offseteinsteller 204 eingestellt bzw. auch von einer Steuereinrichtung vorgegeben werden. Das Frequenzverhältnis f/f₀ zwischen dem Dreiecksignal U_{Δ} und der Netzspannung U_{Netz} wird über den Frequenzteiler 201 und die in diesem hinterlegte Umwandlungstabelle bestimmt.

Auf vergleichbare Weise wird auch das Wobbelsignal U_{mod} in seiner Phasenlage an die Netzspannung U_{Netz}, repräsentiert durch die Referenzspannung U_{ref} durch die weitere Synchronisationseinheit 245 angepasst. Zu diesem Zweck weist die weitere Synchronisationseinheit 245 einen Dreieckspannungsgenerator 210 für das Wobbelsignal U_{mod} auf, der als spannungsgesteuerter Frequenzgenerator ausgeführt ist, dessen Frequenz f' über ein Eingangsspannungssignal U_{f'} gesteuert wird. Die Frequenz des Wobbelsignals U_{mod} ist typischerweise kleiner als die Frequenz des Hilfssignals U_{Δ}, ist jedoch größer als die Netzfrequenz.

Innerhalb der weiteren Synchronisationseinheit 245 wird das dreieckförmige Wobbelsignal U_{mod} einem Frequenzwandler 211 zugeführt. Zur Durchführung eines Vergleichs der Phasenlagen des Wobbelsignals U_{mod} und des niederfrequenteren Netzspannungsverlaufs, repräsentiert durch die Referenzspannung U_{ref}, führt der Frequenzwandler 211 eine Frequenzteilung des Dreiecksignals U_{mod} um einen geeigneten Faktor, sowie eine Wellenumformung in ein sinusförmiges Signal durch. Wiederum kann, wie im Zusammenhang mit der Synchronisationseinheit 243 für das Hilfssignal U_{Δ} beschrieben, eine Umwandlung mithilfe eines umlaufenden Zählers und einer Umwandlungstabelle, in der für jeden Zählerstand ein korrespondierender Wert einer Sinusspannung abgelegt ist, vorgenommen werden. Das von Frequenzteiler 211 abgegebene sinusförmige Signal wird in einem Phasenvergleicher 212 mit dem Referenzspannungssignal U_{ref} verglichen. Am Ausgang des Phasenvergleichers 212 wird ein Signal U_{Δφ'} ausgegeben, das proportional zum Phasenunterschied der beiden Eingangssignale ist. Dieser Phasenunterschied wird einem Regelbaustein 215, der beispielsweise wiederum als Proportional-/Integralregler (PI-Regler) ausgeführt sein kann, zugeführt. Der Regelbaustein 215 gibt an seinem Ausgang das Eingangssignal U_{f'} für den Dreieckspannungsgenerator 210 zur Erzeugung des Wobbelsignals U_{mod} aus.

Optional kann zur Unterdrückung von Schwingungsneigungen der Regelung der Frequenz f des Dreiecksignals U_{Δ} ein Korrektursignalerzeuger 216 vorgesehen sein, der ausgehend von dem Wobbelsignal U_{mod} ein Korrektursignal erzeugt, das über den Addierer 203 dem Eingang des Regelbausteins 205 zugeführt wird. Die Regelung kann so um eine steuernde Komponente erweitert werden, die Schwingungsneigungen insbesondere bei Frequenzsprüngen dämpft. Der Korrektursignalerzeuger 216 kann beispielsweise einen Integrator umfassen.

Bei dem in Figur 3 dargestellten Beispiel wird ein dreieckförmiges Wobbelsignal U_{mod} verwendet. Die von einem Wechselrichter aufgrund der Taktung der Halbleiterleistungsschalter abgegebenen elektromagnetischen Störungen sind in ihrer Frequenz mit der Frequenz des periodischen Hilfssignals korreliert. Bei Verwendung eines dreieckförmigen Wobbelsignals zur Variation der Frequenz des Hilfssignals verteilen sich eingebrachte elektromagnetische Störungen auf einen breiteren Frequenzbereich. Die jeweiligen Amplituden der elektromagnetischen Störungen fallen dann bei einem konkreten Frequenzwert deutlich kleiner aus. Bei vorgegebenen Grenzwerten für die Amplituden der Störungen kann bei Verwendung eines dreieckförmigen Wobbelsignals U_{mod} eine weniger aufwendige Filterung des Ausgangssignals der Wechselrichterbrücke erfolgen. Insbesondere kann beim Ausführungsbeispiel der Fig. 1 die zweite Induktivität 32a, 32b der Ausgangsstromfilter 3a, 3b in ihrem Induktivitätswert verkleinert werden, in Abhängigkeit von gesetzlichen oder regulatorischen Vorgaben kann sie in einigen Fällen sogar ganz entfallen. Daraus resultiert ein geringerer Materialeinsatz, wodurch Kosten, Gewicht und Bauraum eingespart werden können.

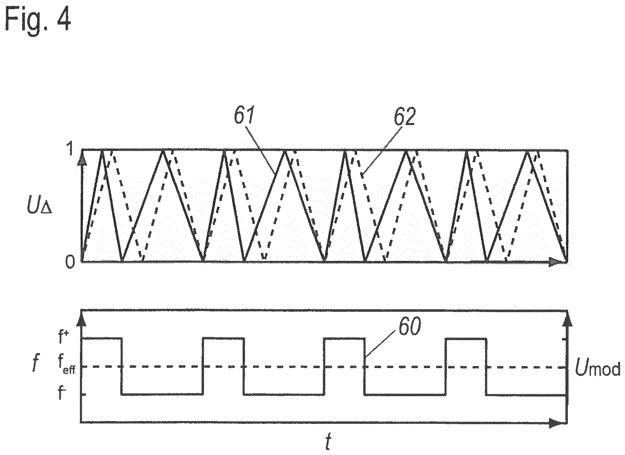

Eine andere Anwendung eines in seiner Frequenz zeitlich variierenden Hilfssignals ist im Zusammenhang mit Fig. 4 dargestellt.

Fig. 4 zeigt in ihrem unteren Teil in einem Diagramm einen zeitlichen Verlauf 60 eines rechteckförmigen Modulationssignals U_{mod} (rechte y-Achse des Diagramms gegenüber der Zeit t auf der x-Achse des Diagramms). Bei einem derartigen Verlauf 60 des Modulationssignals U_{mod} springt die Frequenz des Hilfssignals zwischen zwei Frequenzen f⁻, f⁺, die auf der linken y-Achse des Diagramms eingezeichnet sind.

Im oberen Diagramm ist der sich aus dem Verlauf 60 des Modulationssignals U_{mod} ergebende Zeitverlauf 61 des periodischen Hilfssignals dargestellt. Die Zeiten, die das Wobbelsignal U_{mod} auf dem einen bzw. anderen Wert verweilt sind dabei so gewählt, dass das Hilfssignal innerhalb der Periodendauer des Wobbelsignals U_{mod} im dargestellten Ausführungsbeispiel jeweils eine Periode mit der höheren Frequenz f⁺ und eine Periode mit der niedrigeren Frequenz f durchläuft. In alternativen Ausgestaltungen kann vorgesehen sein, die höhere Frequenz f⁺ und/oder die niedrigere Frequenz f jeweils für mehrere Perioden beizubehalten.

Im Mittel stellt sich durch den Wechsel zwischen den Frequenzen f⁻ und f⁺ eine mittlere effektive Frequenz f_{eff} ein, die im unteren Teil der Figur 4 in Form einer gestrichelten Linie eingezeichnet ist. Im oberen Teil der Figur 4 ist ein Verlauf 62 eines Hilfssignals ebenfalls gestrichelt eingezeichnet, bei dem das Hilfssignal konstant die Frequenz f_{eff} aufweist. Ein Vergleich der Zeitverläufe 61, 62 zeigt, dass im Mittel die Frequenz des modulierten Hilfssignals der effektiven Frequenz f_{eff} entspricht.

Das beschriebene Verfahren kann beispielsweise dann verwendet werden, wenn die Frequenzauflösung des Generators, z.B. des Dreiecksgenerators 200 der Fig. 3, für das periodische Hilfssignal die Einstellung einer gewünschten effektiven Frequenz f_{eff} nicht zulässt. Es kann dann wie dargestellt über das rechteckförmige Wobbelsignal U_{mod} zwischen benachbarten diskreten und einstellbaren Frequenzen f und f⁺ derart hin- und hergesprungen werden, dass im Mittel das Hilfssignal mit der gewünschten Frequenz f_{eff} generiert wird.

### Bezugszeichenliste

- 1: Photovoltaikgenerator (PV-Generator)
- 2: Wechselrichter
- 21: DC/DC-Wandler
- 22: Zwischenkreis
- 221: Kondensator
- 23: DC/AC-Wandler
- 230: Ausgangsbrückenanordnung
- 231, 232: Halbleiterleistungsschalter
- 24: Steuereinrichtung
- 241: Pulsweitenmodulator
- 242: Referenzspannungsgenerator
- 243: Synchronisationseinheit
- 244: Steuereinheit
- 245: weitere Synchronisationseinheit
- 3: Filter
- 4: Transformator
- 41: Primärwicklung
- 42: Sekundärwindung
- 5: Energieversorgungsnetz
- 200: Hilfssignalgenerator
- 201: Frequenzteiler
- 202: Phasenvergleicher
- 203: Addierer
- 204: Offseteinsteller
- 205: PI-Regler
- 206: Addierer
- 207: Grundfrequenzeinsteller
- 210: Wobbelsignalgenerator
- 211: Frequenzteiler
- 212: Phasenvergleicher
- 215: PI-Regler
- 216: Korrektursignalerzeuger

## Patentansprüche

1. Netzgekoppelter Wechselrichter (2) zur Einspeisung von Strom in ein Energieversorgungsnetz (5), aufweisend
- eine Ausgangsbrückenanordnung (230), die über einen Pulsweitenmodulator (241) angesteuert wird, wobei zur Bestimmung von Schaltzeitpunkten der Ausgangsbrückenanordnung (230) ein periodisches Hilfssignal eingesetzt wird, dessen Frequenz gemäß eines vorgegebenen periodischen Wobbelsignals (U_{mod}) variiert und
- eine Synchronisationseinheit (243) zur Phasensynchronisation des Hilfssignals mit dem Energieversorgungsnetz (5), wobei die Synchronisationseinheit (243) zur Einstellung eines vorgegebenen Phasenoffsets (ΔΦ₀) des periodischen Hilfssignals zu einer Phase des Energieversorgungsnetzes (5) eingerichtet ist,
**dadurch gekennzeichnet, dass**
- eine weitere Synchronisationseinheit (245) vorhanden ist, die zur Phasensynchronisation des periodischen Wobbelsignals (U_{mod}) mit dem Energieversorgungsnetz (5) eingerichtet ist, wobei
- die Synchronisationseinheit (243) und die weitere Synchronisationseinheit (245) jeweils eine PLL-Schaltung umfassen und wobei
- das periodische Wobbelsignal (Umod) über einen Korrektursignalerzeuger (216) und einen Addierer (203) zur Schwingungsunterdrückung auf eine Regelstrecke der PLL-Schaltung der Synchronisationseinheit (243) geführt ist.

2. Netzgekoppelter Wechselrichter nach Anspruch 1, bei dem der Pulsweitenmodulator (241) ein Sinus-Dreieck-Modulator und das periodische Hilfssignal ein Dreiecksignal (U_{Δ}) ist.

3. Netzgekoppelter Wechselrichter nach Anspruch 1 oder 2, bei dem die PLL-Schaltung jeweils einen Frequenzwandler (201, 211) mit einer Umwandlungstabelle und einem D/A-Wandler umfasst, zur Umwandlung des periodischen Hilfssignals bzw. des periodischen Wobbelsignals (U_{mod}) in eine phasenstarre Sinusspannung geringerer Frequenz.

4. Netzgekoppelter Wechselrichter nach einem der Ansprüche 1 bis 3, bei der das periodische Wobbelsignal (U_{mod}) ein Dreiecksignal ist.

5. Netzgekoppelter Wechselrichter nach einem der Ansprüche 1 bis 3, bei der das periodische Wobbelsignal (U_{mod}) ein Rechtecksignal ist, durch das das periodische Hilfssignal auf zwei verschiedene Frequenzen (f⁻, f⁺) eingestellt wird.

6. Netzgekoppelter Wechselrichter nach Anspruch 5, bei dem die beiden Frequenzen (f⁻, f⁺) sich um eine Frequenz unterscheiden, die der minimal einstellbaren Frequenzdifferenz eines Hilfssignalgenerators (200) für das Hilfssignals entspricht.

7. Netzgekoppelter Wechselrichter nach Anspruch 6, bei dem das rechteckförmige periodische Wobbelsignal (U_{mod}) ein Tastverhältnis aufweist, bei dem sich im Mittel eine vorgegebene Frequenz f, die zwischen den beiden Frequenzen (f⁻, f⁺) liegt, für das Hilfssignal einstellt.

8. Wechselrichteranordnung mit mindestens zwei netzgekoppelten Wechselrichtern (2a, 2b), die wechselstromseitig miteinander gekoppelt sind, **dadurch gekennzeichnet, dass** die Wechselrichter (2a, 2b) gemäß einem der Ansprüche 1 bis 7 ausgeführt sind.

9. Wechselrichteranordnung nach Anspruch 8, bei der jedem Wechselrichter (2a, 2b) wechselstromseitig ein Ausgangsstromfilter (3a, 3b) nachgeschaltet ist, wobei die Ausgangsstromfilter (3a, 3b) mit einem jeweiligen Ausgang miteinander verbunden sind.

10. Wechselrichteranordnung nach Anspruch 9, bei der der Ausgangsstromfilter (3a, 3b) ein LCL-Filter ist mit einer ersten Induktivität (31a, 31b) und einer zweiten Induktivität (32a, 32b), wobei die zweite Induktivität (32a, 32b) einen kleineren Induktivitätswert aufweist als die erste Induktivität (31a, 31b).

11. Wechselrichteranordnung nach Anspruch 9, bei der der Ausgangsstromfilter (3a, 3b) als LC-Filter mit nur einer Induktivität (31a, 31b) ausgeführt ist.

12. Wechselrichteranordnung nach einem der Ansprüche 9 bis 11, bei der die miteinander verbundenen Ausgänge der Ausgangsstromfilter (3a, 3b) über einen Transformator (4) mit einem Energieversorgungsnetz verbunden sind.

13. Betriebsverfahren für eine Wechselrichteranordnung zur Einspeisung von Leistung in ein Energieversorgungsnetz (5) mit mindestens zwei Wechselrichtern (2a, 2b), die wechselstromseitig miteinander gekoppelt sind, und die jeweils eine Ausgangsbrückenanordnung (230) aufweisen, die pulsweitenmoduliert unter Verwendung eines periodischen Hilfssignals, das mit jeweils einem periodischen Wobbelsignal (U_{mod}) frequenzmoduliert ist, angesteuert wird, wobei das jeweilige periodischen Hilfssignal mit dem Energieversorgungsnetz (5) phasensynchronisiert wird, **dadurch gekennzeichnet, dass**
die periodischen Wobbelsignale (U_{mod}) der beiden gekoppelten Wechselrichter (2a, 2b) mit dem Energieversorgungsnetz (5) und damit untereinander phasensynchronisiert werden, wobei das periodische Wobbelsignal (Umod) über einen Korrektursignalerzeuger (216) und einen Addierer (203) zur Schwingungsunterdrückung auf eine Regelstrecke einer PLL-Schaltung zur Synchronisation des periodischen Hilfssignals geführt ist.

## Claims

1. A grid-tied inverter (2) for supplying current to a power supply system (5), comprising
- an output bridge arrangement (230) that is actuated via a pulse width modulator (241), wherein switching times of the output bridge arrangement (230) are determined by using a periodic auxiliary signal, the frequency of the periodic auxiliary signal varying according to a prescribed periodic wobble signal (U_{mod}), and
- a synchronization unit (243) for phase synchronization of the auxiliary signal to the power supply system (5), wherein the synchronization unit (243) is set up to adjust a prescribed phase offset (ΔΦ₀) of the periodic auxiliary signal in relation to a phase of the power supply system (5),
**characterized in that**
- a further synchronization unit (245) is present that is set up for phase synchronization of the periodic wobble signal (U_{mod}) to the power supply system (5), wherein
- the synchronization unit (243) and the further synchronization unit (245) each comprise a PLL circuit and wherein
- the periodic wobble signal (U_{mod}) is routed to a controlled system of the PLL circuit of the synchronization unit (243) via a correction signal generator (216) and an adder (203) for the purpose of suppressing oscillations.

2. The grid-tied inverter according to claim 1, in which the pulse width modulator (241) is a sine-delta modulator and the periodic auxiliary signal is a triangular-waveform signal (U_{Δ}).

3. The grid-tied inverter according to claim 1 or 2, in which the PLL circuit respectively comprises a frequency converter (201, 211) comprising a conversion table and a D/A-converter, for converting the periodic auxiliary signal or the periodic wobble signal (U_{mod}) into a phase-locked sine-wave voltage of lower frequency.

4. The grid-tied inverter according to one of claims 1 to 3, in which the periodic wobble signal (U_{mod}) is a triangular-waveform signal.

5. The grid-tied inverter according to one of claims 1 to 3, in which the periodic wobble signal (U_{mod}) is a square-wave signal that adjusts the periodic auxiliary signal to two different frequencies (f⁻, f⁺).

6. The grid-tied inverter according to claim 5, in which the two frequencies (f⁻, f⁺) differ by a frequency that corresponds to the minimally adjustable frequency difference of an auxiliary signal generator (200) for the auxiliary signal.

7. The grid-tied inverter according to claim 6, in which the square-wave-shaped periodic wobble signal (U_{mod}) has a duty ratio at which, on average, a prescribed frequency f situated between the two frequencies (f⁻, f⁺) arises for the auxiliary signal.

8. An inverter arrangement comprising at least two grid-tied inverters (2a, 2b) that are coupled to one another on an AC side, **characterized in that** the inverters (2a, 2b) are configured as claimed in one of claims 1 to 7.

9. The inverter arrangement according to claim 8, in which each inverter (2a, 2b) has a downstream output current filter (3a, 3b) on the AC side, wherein the output current filters (3a, 3b) are connected to one another by a respective output.

10. The inverter arrangement according to claim 9, in which the output current filter (3a, 3b) is an LCL filter comprising a first inductance (31a, 31b) and a second inductance (32a, 32b), wherein the second inductance (32a, 32b) has a lower inductance value than the first inductance (31a, 31b).

11. The inverter arrangement according to claim 9, in which the output current filter (3a, 3b) is configured as an LC filter comprising only one inductance (31a, 31b).

12. The inverter arrangement according to one of claims 9 to 11, in which the interconnected outputs of the output current filters (3a, 3b) are connected to a power supply system via a transformer (4).

13. A method for operating an inverter arrangement for supplying power to a power supply system (5) having at least two inverters (2a, 2b) that are coupled to one another on an AC side, each of the at least two inverters (2a, 2b) comprising an output bridge arrangement (230) that is actuated in pulse width modulated fashion using a periodic auxiliary signal that is frequency modulated with a respective periodic wobble signal (U_{mod}), wherein the respective periodic auxiliary signal is phase synchronized to the power supply system (5), **characterized in that** the periodic wobble signals (U_{mod}) of the two coupled inverters (2a, 2b) are phase synchronized to the power supply system (5) and hence among one another, wherein the periodic wobble signal (U_{mod}) is routed to a controlled system of a PLL circuit for synchronizing the periodic auxiliary signal via a correction signal generator (216) and an adder (203) for the purpose of suppressing oscillations.

## Revendications

1. Onduleur connecté au réseau (2) destiné à injecter du courant dans un réseau de distribution d'énergie (5), comprenant
- un arrangement pont de sortie (230) qui est piloté par le biais d'un modulateur d'impulsions en largeur (241), les instants de commutation de l'arrangement pont de sortie (230) étant déterminés en appliquant un signal auxiliaire périodique dont la fréquence varie en fonction d'un signal vobulé périodique (U_{mod}) prédéfini et
- une unité de synchronisation (243) destinée à la synchronisation de phase du signal auxiliaire avec le réseau de distribution d'énergie (5), l'unité de synchronisation (243) étant conçue pour régler un déphasage (ΔΦ₀) prédéfini du signal auxiliaire périodique par rapport à une phase du réseau de distribution d'énergie (5),
**caractérisé en ce que**
- une unité de synchronisation supplémentaire (245) est présente, laquelle est conçue pour la synchronisation de phase du signal vobulé périodique (U_{mod}) avec le réseau de distribution d'énergie (5),
- l'unité de synchronisation (243) et l'unité de synchronisation supplémentaire (245) comprenant respectivement un circuit à PLL et
- le signal vobulé périodique (U_{mod}) étant acheminé sur un système asservi du circuit à PLL de l'unité de synchronisation (243) par le biais d'un générateur de signal de correction (216) et d'un additionneur (203) en vue d'inhiber les oscillations.

2. Onduleur connecté au réseau selon la revendication 1, dans lequel le modulateur d'impulsions en largeur (241) est un modulateur sinusoïdal triangulaire et le signal auxiliaire périodique est un signal triangulaire (U_{Δ}).

3. Onduleur connecté au réseau selon la revendication 1 ou 2, dans lequel le circuit à PLL comporte respectivement un convertisseur de fréquence (201, 211) pourvu d'une table de conversion et d'un convertisseur N/A, en vue de convertir le signal vobulé périodique (U_{mod}) en une tension sinusoïdale à phase bloquée de faible fréquence.

4. Onduleur connecté au réseau selon l'une des revendications 1 à 3, dans lequel le signal vobulé périodique (U_{mod}) est un signal triangulaire.

5. Onduleur connecté au réseau selon l'une des revendications 1 à 3, dans lequel le signal vobulé périodique (U_{mod}) est un signal rectangulaire par le biais duquel le signal auxiliaire périodique est réglé sur deux fréquences (f⁻, f⁺) différentes.

6. Onduleur connecté au réseau selon la revendication 5, dans lequel les deux fréquences (f⁻, f⁺) se différencient d'une fréquence qui correspond à la différence de fréquence minimale pouvant être réglée d'un générateur de signal auxiliaire (200) pour le signal auxiliaire.

7. Onduleur connecté au réseau selon la revendication 6, dans lequel le signal vobulé périodique (U_{mod}) de forme rectangulaire possède un rapport cyclique auquel une fréquence f prédéfinie, qui se situe entre les deux fréquences (f⁻, f⁺), se règle pour le signal auxiliaire.

8. Arrangement onduleur comprenant au moins deux onduleurs connectés au réseau (2a, 2b) qui sont connectés l'un à l'autre du côté du courant alternatif, **caractérisé en ce que** les onduleurs (2a, 2b) sont réalisés selon l'une des revendications 1 à 7.

9. Arrangement onduleur selon la revendication 8, dans lequel un filtre à courant de sortie (3a, 3b) est branché en aval du côté du courant alternatif de chaque onduleur (2a, 2b), les filtres à courant de sortie (3a, 3b) étant reliés ensemble avec une sortie respective.

10. Arrangement onduleur selon la revendication 9, dans lequel le filtre à courant de sortie (3a, 3b) est un filtre LCL ayant une première inductance (31a, 31b) et une deuxième inductance (32a, 32b), la deuxième inductance (32a, 32b) possédant une valeur d'inductance plus faible que la première inductance (31a, 31b).

11. Arrangement onduleur selon la revendication 9, dans lequel le filtre à courant de sortie (3a, 3b) est réalisé en tant que filtre LC ayant seulement une inductance (31a, 31b).

12. Arrangement onduleur selon l'une des revendications 9 à 11, dans lequel les sorties reliées ensemble des filtres à courant de sortie (3a, 3b) sont reliées par le biais d'un transformateur (4) à un réseau de distribution d'énergie.

13. Procédé de fonctionnement d'un arrangement onduleur destiné à injecter de la puissance dans un réseau de distribution d'énergie (5), comprenant deux onduleurs (2a, 2b) qui sont connectés l'un à l'autre du côté du courant alternatif et qui possèdent respectivement un arrangement pont de sortie (230), lequel est piloté par modulation d'impulsions en largeur en utilisant un signal auxiliaire périodique qui est modulé en fréquence respectivement avec un signal vobulé périodique (U_{mod}) , le signal auxiliaire périodique étant synchronisé en phase avec le réseau de distribution d'énergie (5), **caractérisé en ce que** les signaux vobulés périodiques (U_{mod}) des deux onduleurs (2a, 2b) connectés sont synchronisés en phase avec le réseau de distribution d'énergie (5) et ainsi entre eux, le signal vobulé périodique (U_{mod}) étant acheminé, par le biais d'un générateur de signal de correction (216) et d'un additionneur (203), sur un système asservi d'un circuit à PLL destiné à la synchronisation du signal auxiliaire périodique en vue d'inhiber les oscillations.
